Europäisches Patentamt

European Patent Office

Office européen des brevets

(19)

(11) Publication number: **0 003 655**
**B1**

(12) **EUROPEAN PATENT SPECIFICATION**

(45) Date of publication of patent specification: **04.11.81**

(21) Application number: **79300152.0**

(22) Date of filing: **31.01.79**

(51) Int. Cl.³: **B 62 D 49/02,**
**A 01 B 51/04, B 62 D 13/02**

(54) **Tractors and fittings therefor.**

(30) Priority: **04.02.78 GB 456778**

(43) Date of publication of application:
**22.08.79 Bulletin 79/17**

(45) Publication of the grant of the European patent:
**04.11.81 Bulletin 81/44**

(84) Designated Contracting States:
**BE DE FR IT NL SE**

(56) References cited:
**DE - B - 1 166 541**
**DE - B - 1 217 798**
**DE - C - 1 074 983**
**US - A - 3 212 793**

(73) Proprietor: **Dodgson, John Richard**
**"Cragg" Burneside**
**Kendal Cumbria (GB)**

(72) Inventor: **Dodgson, John Richard**
**"Cragg" Burneside**
**Kendal Cumbria (GB)**

(74) Representative: **Neill, Alastair William**
**Appleyard Lees & Co. 15 Clare Road**
**Halifax West Yorkshire HX1 2HY (GB)**

Courier Press, Leamington Spa, England.

## Tractors and fittings therefor

The invention relates to tractors and to fittings therefor.

Tractors such as agricultural tractor vehicles are well known. It is also well known that accessories may be attached to a tractor, such as buckets and fork lifts. Such accessories are normally either mounted at the front of the tractor, for example as shown in West German Patent Specification No. 1074983, or are mounted at the rear of the tractor on the conventional three-point linkage.

If the accessories are mounted at the front of the tractor, there is the inconvenience of fitting special supports or lifting arms, and there are a number of other disadvantages. When the accessory is raised to carry a load, driving visibility is obscured, and furthermore, if a very heavy load is carried, it may be necessary to fit counterweights to the tractor. A further severe disadvantage is that the accessory is not very manoeuvrable and it may take several back and forward movements of the tractor to negotiate the accessory into a desired position for loading or unloading. A specific disadvantage of the device shown in West German Patent Specification No. 1074983 is that the arrangement shown therein gives rise to a conflicting requirement. The arrangement effectively has two pairs of front wheels which are both steerable. Considerable problems arise in practice in designing the geometry of the supports for the wheels. As can be realised if one imagines a plan view of the arrangement with both sets of wheels turning into a steering position, one set of wheels must follow a different turning circle to the other set of wheels and it is very difficult in practice to provide an arrangement in which the wheels operate consistently in synchronism with no tendency for one pair of wheels to sideslip occasionally.

If the accessories are mounted at the rear of the tractor, they can be fitted more conveniently, using the conventional three-point linkage, and visibility is no longer obscured. However counterweights may still be needed when lifting a heavy load, and manoeuvrability is still limited.

United States Patent Specification No. 3212793 describes an arrangement in which a steerable trailer is provided at the rear of a vehicle. However this arrangement has three disadvantages.

Firstly, although the wheels of the trailer are steerable in synchronism with the front wheels of the towing vehicle, the vehicle and trailer are connected together by a simple pivotal connection whuch allows pivotal movement about a vertical axis through the connection and about a horizontal axis. The trailer cannot therefore be put to agricultural purposes, for example by carrying a bucket which may overhang the rear axle of the trailer. If such a bucket were used to scoop up a load at the rear of the trailer, a considerable turning moment would be generated about the horizontal axis of the wheels of the trailer. The whole trailer would tilt about the axis of the wheels and the front end of the trailer would rise. The rising action of the front end of the trailer would tend to lift the rear wheels of the towing vehicle off the ground. The wheels might not be lifted completely clear of the ground but the wheels would lose a considerable amount of traction and it would be quite impossible to use the device on soft or muddy ground, such as occurs during agricultural use.

Secondly, the trailer of United States Patent Specification No. 3212793 merely has two wheels which are steerable with respect to the chassis of the trailer. Thus if the trailer stands in a stationary position on the ground and the wheels are turned, it is only the wheels that swivel and the body of the trailer remains in its original position. Thus any accessories mounted on the trailer are relatively unmanoeuvrable and the direction of the accessories cannot be varied merely by changing the position of the wheels.

Thirdly, it is unlikely that the trailer shown in United States Patent Specification No. 3212793 would work in practice, because of the fact that the whole trailer pivots about a vertical axis passing through the connection point with the vehicle. The arrangement shown in United States Patent 3212793 may be able to operate satisfactorily when travelling forwards, but complications will arise when trying to reverse. There may be no problems when the vehicle and trailer are initially in line and it is desired to reverse backwardly along a curved path, because the wheels of the trailer will be steered in synchronism to follow the correct path. Once the turning vehicle is at an angle to the trailer however complications begin. As is well known by anyone who has driven a conventional non-steerable trailer, reversing the towing vehicle when the vehicle is at an angle to the trailer causes the rear of the vehicle to push the front of the trailer to one side and the trailer tries to turn in the opposite direction to that followed by the vehicle. This effect can be used to steer the trailer provided that one has the necessary skill. However the wheels of the towing vehicle have to be initially turned in a direction which is opposite to that which it is desired for the trailer to follow. With the arrangement shown in the United States Patent Specification however, the wheels of the trailer will turn in the same direction as the wheels of the vehicle. Thus the swinging effect of the rear end of the vehicle will be trying to turn the trailer in one direction whilst the steerable wheels of the trailer will be trying to turn the trailer in the opposite direction. The result is that the trailer will in fact follow a crabwise sideways path, with the wheels of the trailer skidding.

West German Patent Specification No. 1166541 describes an apparatus having similar problems to the apparatus described in United States Patent Specification No. 3212793. The German Patent Specification describes an apparatus in which the wheels themselves are steerable, and if a heavy load overhangs the rear of the wheels, the driving wheels of the tractor will tend to be lifted from the ground.

The invention as claimed solves the problem of fitting an agricultural tractor vehicle with accessories such as a bucket of fork lift, with the accessories being very manoeuvrable and capable of supporting large loads without the need for counterweights, and without the disadvantages associated with the devices described in United States Patent Specification No. 3212793 and West German Patent Specification No. 1166541.

Accordingly the invention provides a fitting for a tractor, the fitting comprising an accessory-carrying support device and means for attaching the support device to the rear of the tractor, the support device having a fixed axle carrying wheels arranged to bear at least part of the load of the support device, and means for steering the wheels of the support device, the steering means being arrangeable to synchronise the steering movement of the support device with the steering movement of the tractor, characterised in that the means for attaching the support device to the rear of the tractor comprise a mounting to which the support device is mounted for pivotal movement about a vertical axis passing through the fixed axle, the mounting having means for attachment to the rear of the tractor to permit vertical movement of the mounting relative to the tractor but prevent pivotal movement of the mounting with respect to the tractor.

Thus the fitting can move vertically relative to the tractor to cope with undulations in the ground but it can be arranged so that it cannot pivot about a horizontal axis passing through the connection point. Thus if the front of the fitting tends to rise, for example because a heavy load overhangs the rear of the fitting, the load is tending to lift the entire tractor bodily off the ground, and not merely the rear wheels. There is thus much less risk of the tractor losing traction and becoming immobilised.

Since the accessory carrying support device has a fixed axle and steering takes place by swivelling the whole support device (and hence any accessory attached thereto) a user has much more directional control over any accessory carried by the support device and the accessory can be directed into much narrower and more restricted spaces than could any accessory mounted on a trailer such as that shown in United States Patent Specification No. 3212793.

The arrangement as claimed eliminates the problem encountered when reversing a trailer such as that shown in United States Patent Specification No. 3212793. Since pivotal movement can only take place about a vertical axis passing through the fixed axle, the fitting and the tractor act as a single substantially rigid chassis vehicle, with a steerable axle at the rear end. Thus all the steering effect on the fitting is carried out by the movement of the wheels and there is no conflicting tendency for the rear of the tractor to apply an additional turning effect to the fitting.

By way of example, specific embodiments of the invention will now be described, with reference to the accompanying drawings, in which:—

Figure 1 is a diagrammatic side view of one embodiment of tractor fitting according to the invention, attached to a conventional agricultural tractor, and carrying an accessory in the form of a pair of lifting arms;

Figure 2 is a plan view of the fitting shown in Figure 1, to a small scale and with the accessory removed;

Figure 3 is an exploded perspective view of the support device;

Figure 4 is a diagrammatic plan view showing that the steering movement of the wheels of the support device and the front wheels of the tractor of which it is fitted are synchronised;

Figure 5 is a plan view illustrating the steering means of the support device;

Figure 6 is a plan view of an alternative embodiment showing an alternative steering means;

Figure 7 is a side view of the support device carrying a different accessory; and

Figure 8 is an exploded perspective view of the support device carrying yet another accessory.

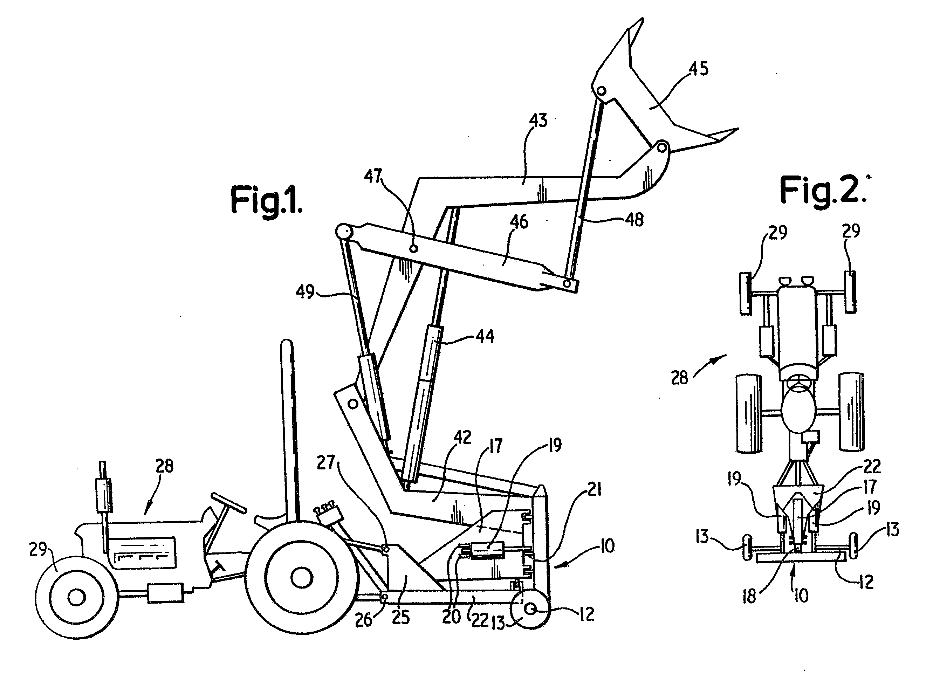

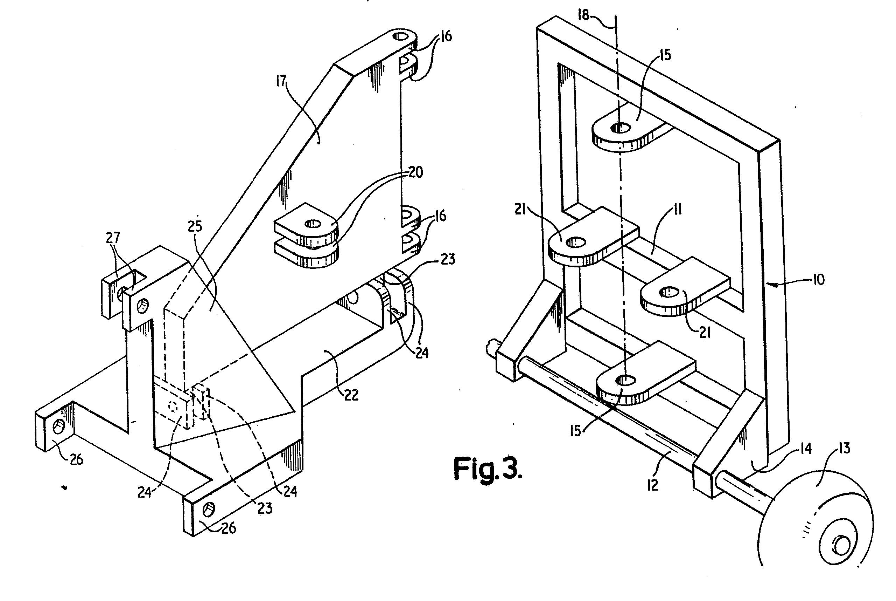

The support device shown in Figures 1 to 3 comprises a support frame 10 which is generally rectangular with a horizontally extending cross member 11. At the base of the frame there is an axle 12 carrying at each end a wheel, only one wheel 13 being shown in Figure 3 for the sake of simplicity. The axle 12 is journalled in bearings in lugs 14 welded to the base of the frame 10.

At the top and bottom of the frame 10 there is a horizontal lug 15 and each of these lugs is pivotally connected between a pair of lugs 16, the two pairs of lugs 16 being arranged one each at the top and bottom of a vertically extending generally triangular support plate 17. The frame 10 can thus pivot with respect to the support plate 17 about a vertical axis 18. A single acting hydraulic ram 19 is connected between a pair of lugs 20 on each side of the plate 17 and a lug 21 mounted on the cross member 11 of the frame 10. Pivotal movement of the frame 10 about a vertical axis can thus be controlled by these rams.

The plate 17 is in turn pivotally mounted on a horizontal support plate 22, lugs 23 at the base of the support plate being pivotally connected between pairs of lugs 24 projecting upwardly from the plate 22. The plate 17 is thus free to rock with respect to plate 22 about a horizontal axis, taking the frame 10 with it, within limits defined by a pair of inclined flanges 25 welded to the plate 22.

There are two spaced apart lugs 26 projecting from the plate 22 and there is also a pair of lugs 27 projecting from the flanges 25. The two lugs 26 together with the pair of lugs 27 form a three point connection at the three corners of a triangle by means of which the support device can be connected to the conventional three point linkage at the rear of a tractor indicated generally in Figures 1 and 2 by the reference numeral 28. The support device, although connected to the tractor, bears its own weight on its wheels 13. In use the conventional tractor three point linkage is allowed to move freely so that the wheels 13 can move up and down freely with respect to the tractor, carrying the support device with them, so that all six wheels can remain in contact with the ground, whatever the terrain. If the ground should the slightly higher at one side of the support device than at the other, this can be accommodated by rocking of the support plate 17 about the horizontal support plate 22.

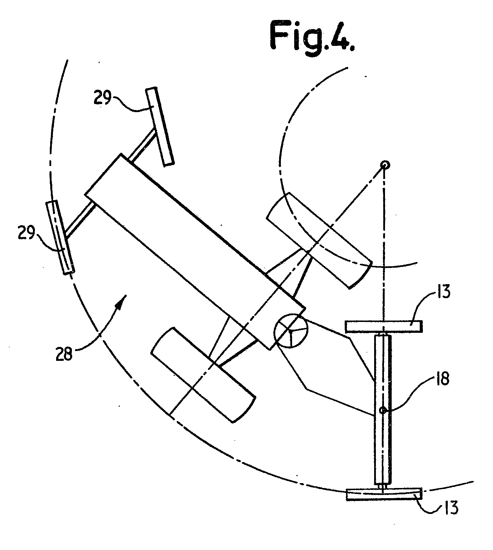

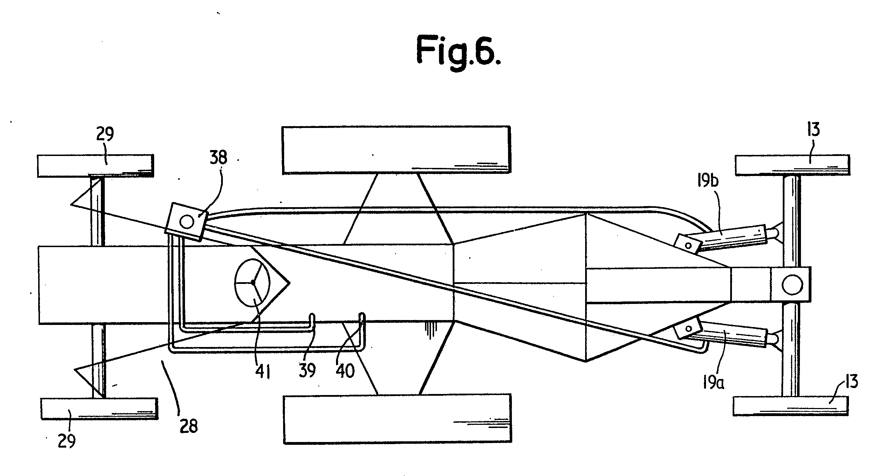

To make the support device, and hence any accessory mounted thereon, particularly manoeuvrable, the rams 19 which control the pivoting of the frame 10 about a vertical axis, and hence control the steering of the wheels 13, are arranged to operate in synchronism with the steering of the tractor. As shown in Figure 4, the arrangement is such that when the steerable front wheels 29 of the tractor pivot about a vertical axis in one direction, the wheels 13 pivot about the axis 18 in the opposite direction. Figure 4 shows a tractor arranged on its turning circle, with the support device following in synchronism. Figure 4 enables geometric calculations to be made for the purpose of designing the rams 19 so that they are in the correct position and have the correct properties for providing the necessary movement of the wheels 13 for a corresponding movement of the wheels 29.

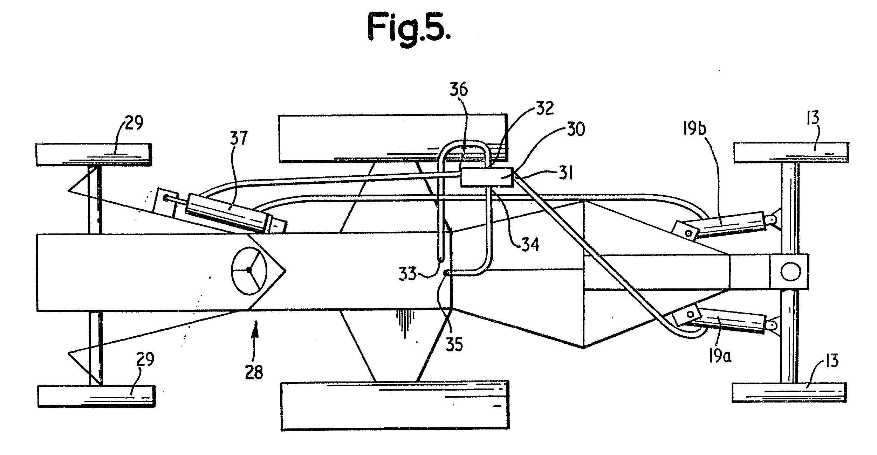

In the embodiment shown in Figure 5, a hydraulic control unit 30 is provided having four ports. A first port 31 is connected by hydraulic piping to one of the rams 19a of the support device. The other ram 19b of the support device is connected by hydraulic piping to one end of a double acting ram 37. The other end of the double acting ram 37 is connected by hydraulic piping to another port 36 of the valve 30. In use the double acting ram 37 is positioned to control the steering of the front wheels 29 of the tractor 28. The other two ports 32 and 34 of the valve 30 are connected by hydraulilc piping respectively to the output 33 and input 35 of a hydraulic power unit of the tractor. The conventional steering of the tractor utilising the steering wheel is not used when the tractor is being manoeuvred with the support device fitted thereto. If it is desired to turn to the right, the valve 30 is moved by the driver of the tractor into a position in which port 32 communicates with port 31 and port 34 communicates with port 36. Thus hydraulic oil from the power unit of the tractor flows into ram 19a causing the wheels 13 to pivot about a vertical axis in an anti-clockwise direction as viewed in Figure 5. The action of ram 19a causes ram 19b to retract, so hydraulic fluid is forced from ram 19b into ram 37 causing this ram to retract and turn the wheels 29 about a vertical axis in a clockwise direction. Hydraulic fluid which is forced out of the ram 37 passes through the valve 30 and back to the hydraulic power unit of the tractor. When it is desired to turn the tractor to the left, the valve 30 is moved into a second position in which port 36 is connected to the port 32 and port 31 is connected to port 34. Hydraulic fluid is thus forced into ram 37, causing it to extend and turn the wheels 29 anti-clockwise. Fluid from the other side of the piston of ram 37 is forced into ram 19b causing the wheels 13 to pivot clockwise. The ram 19a retracts and hydraulic fluid from this ram passes via the valve 30 back to the inlet 35 of the hydraulic power unit of the tractor.

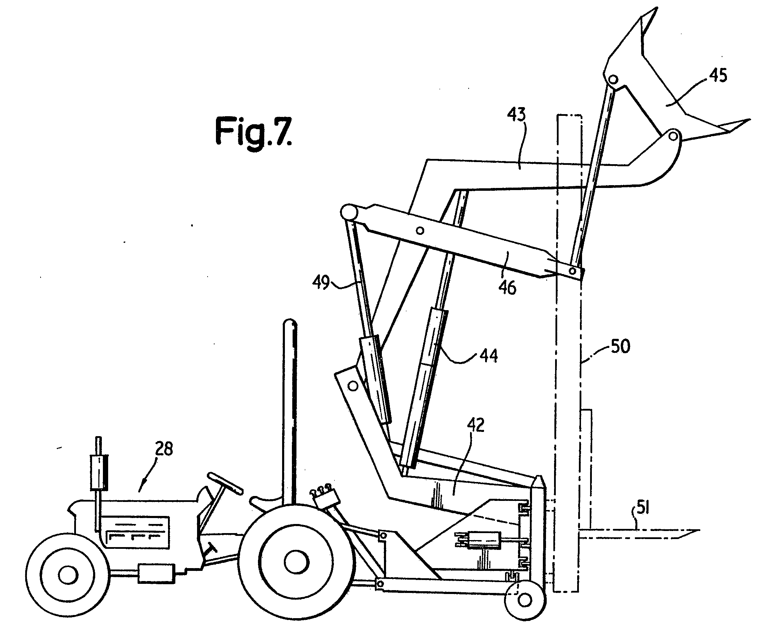

Figure 6 shows an alternative embodiment in which the steering of the wheels 13 is controlled by a valve 38 connected by hydraulic piping between the rams 19a and 19b and the output 39 and input 40 of a hydraulic power unit of the tractor 28. Steering of the front wheels 29 of the tractor is controlled in a conventional manner by operation of the steering wheel 41. However the valve 38 is coupled to the steering system of the tractor so that when the wheels 29 are turned clockwise as viewed in Figure 6 hydraulic fluid is able to flow from the outlet 39 to the ram 19a causing the wheels 13 to pivot anti-clockwise. Fluid returns from ram 19b via the valve 38 to the input 40. When the tractor wheels 29 pivot in the opposite direction, the reverse occurs.

Figure 1 shows an accessory in the form of a pair of lifting arms being attached to the frame 10. The accessory comprises a support framework 42 to which a boom is pivotally connected, the boom comprising a pair of spaced apart lifting arms 43. Lifting of the arms 43 is controlled by a pair of rams 44 connectable to a hydraulic power unit of the tractor. A lifting bucket 45 is pivotally mounted between the arms 43, the pivoting of the bucket being controlled by a pair of levers 46. Each lever is pivotally mounted at 47 on one of the arms 43. One end of each lever 46 is pivotally connected by a link 48 to the bucket 45 and the other end of each arm 43 is connected by a ram 49 to the support 42. The geometry of the accessory is such that if the length of the rams 49 is kept fixed, the orientation of the bucket 45 remains fixed as the arms 43 are raised and lowered. Thus material can be scooped up in the bucket 45, the bucket then being positioned with its mouth vertical. The arms 43 can be raised and the bucket 45 will remain with its mouth vertical. After the load has been removed to a point where the load is to be released, the rams 49 can be retracted and this will cause the bucket 45 to tip up and empty its load.

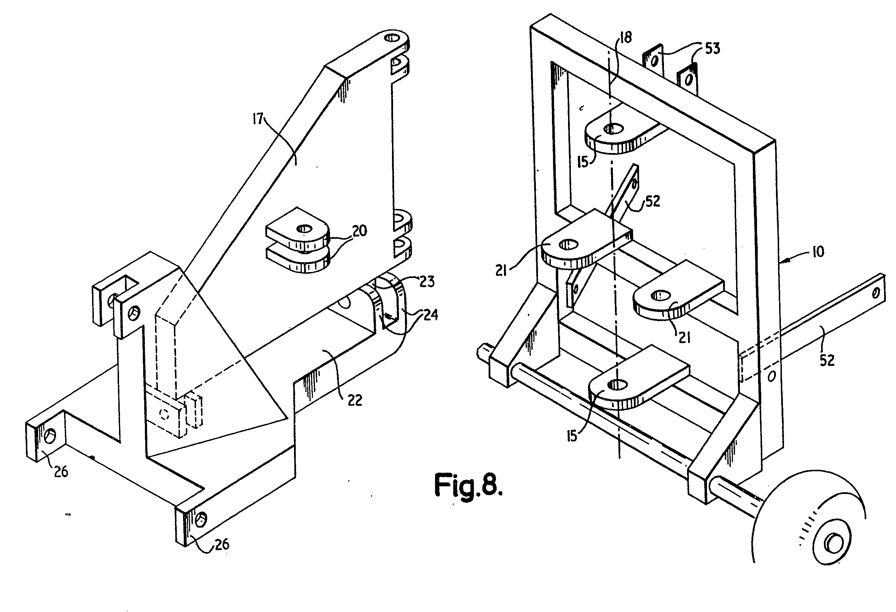

The support 42 carrying the arms 43 is readily detachable from the frame 10 and can be replaced by other accessories. As indicated in Figure 7 for example, a vertical mast 50 can be attached to the frame 10, carrying a hydraulically operated forklift 51. As shown in Figure 8, a pair of pivotable links 52 may be connected to the frame 10, together with a pair of lugs 53, the two links and the pair of lugs together forming a three point linkage which is similar to the conventional three point linkage on a tractor.

Any of the agricultural implements which are normally fitted to the three point linkage of a tractor can be fitted to the three point linkage shown in Figure 8, with the advantage that the steerable frame 10 gives greater manoeuvrability and will support a greater weight than can be supported on the conventional three point linkage of a tractor. The links 52 may be provided with hydraulic controls operable from a hydraulic power unit of the tractor, in the same way that conventional tractor linkages are hydraulically operable.

I have found that since support devices as shown in the accompanying Figures have their own support wheels, they can support greater loads than support devices mounted directly on a tractor, without the need to fit special counterweights to the tractor. Furthermore the fact that the steering of the support device can be synchronised with that of a tractor to which it is fitted makes the support device more manoeuvrable than if it was mounted directly on a tractor or was mounted on a non-steerable trailer. Any accessory which is fitted to the frame 10 will of course make the same movements as the frame 10 when the frame 10 is steered.

Since the support device can be connected to the conventional three point linkage of a tractor, no special fitting brackets are required.

The invention is not restricted to the details of the foregoing embodiments. For instance the wheels 13 may be connected mechanically or hydraulically to a power unit of a tractor to which the support device is fitted, to provide power for driving the wheels 13.

The invention may have useful industrial applications as well as agricultural applications, and the devices shown may be adapted for attachment to industrial tractors or other industrial vehicles.

The fitting may be permanently connected to a tractor, so that the tractor takes the form, for example, of a six wheeled tractor, the steering of the rear wheels being synchronised with the steering of the front wheels, and the rear end of the tractor comprising an accessory carrying support device.

**Claims**

1. A fitting for a tractor, the fitting comprising an accessory carrying support device (10) and means (17, 22, 26, 27) for attaching the support device to the rear of the tractor, the support device having a fixed axle (12) carrying wheels (13) arranged to bear at least part of the load of the support device, and means (19a, 19b) for steering the wheels of the support device, the steering means being arrangeable to synchronise the steering movement of the support device with the steering movement of the tractor, characterised in that the means (17, 22, 26, 27) for attaching the support device to the rear of the tractor comprise a mounting (17, 22) to which the support device (10) is mounted for pivotal movement about a vertical axis (18) passing through the fixed axle (12), the mounting (17, 22) having means (26, 27) for attachment to the rear of the tractor to permit vertical movement of the mounting (17, 22) relative to the tractor but prevent pivotal movement of the mounting with respect to the tractor.

2. A fitting as claimed in Claim 1, in which the attachment means (26, 27) comprise two attachment points (26) spaced apart laterally and a third attachment point (27) spaced vertically from the attachment points (26).

3. A fitting as claimed in Claim 1 or Claim 2, in which the support device carries an accessory in the form of a pair of pivotally mounted lifting arms (43), for example for lifting a bucket, scoop, fork, snowplough, agricultural or other implement positioned between the arms.

4. A fitting as claimed in Claim 3, in the pair of arms (43) is detachable from the support device.

5. A fitting as claimed in Claim 1 or Claim 2, in which the support device carries an accessory in the form of a forklift mechanism (50, 51) or other vertically extending mechanism.

6. A fitting as claimed in Claim 5, in which the vertically extending mechanism is detachable from the support device.

7. A fitting as claimed in Claim 1, or Claim 2, in which the support device carries an accessory in the form of a three point linkage (52, 53).

8. A fitting as claimed in Claim 7, in which the three point linkage is hydraulically adjustable.

9. A fitting as claimed in Claim 7 or Claim 8, in which the three point linkage is detachable from the support device.

10. A fitting as claimed in any one of the preceding claims, in which the steering means (19a, 19b) comprise means which, when the support device is attached to a tractor having steerable front wheels (29) and the front wheels of the tractor are turned, turn the wheels (13) of the support device in the opposite direction to the direction in which the front wheels of the tractor are turned.

11. A fitting as claimed in Claim 10, in which the steering means (19a, 19b) comprise a control unit (30) which is connected to the wheels of the support device and is connectable to the steerable front wheels of a tractor to which the support device is attached, the control unit being operable by a driver of the tractor to steer both the wheels of the tractor and the wheels of the support device.

12. A fitting as claimed in Claim 10, in which the steering means (19a, 19b) comprise a control unit (38) connectable between the steerable wheels of the tractor and the steerable wheels of the support device so that when the steering wheel (41) of the tractor is turned, the steerable wheels of the tractor and the wheels of the support device operate in synchronism.

13. A tractor or other vehicle provided with a fitting as claimed in any one of the preceding claims.

## Patentansprüche

1. Anbauteil für einen Traktor, mit einer Zubehör tragenden Tragvorrichtung (10) und mit Mitteln (17, 22, 26, 27) zum Befestigen der Tragvorrichtungen am hinteren Teil des Traktors, wobei die Tragvorrichtung eine feste Achse (12) tragende Räder (13) aufweist, die derart angeordnet sind, daß sie einen Teil der Last der Tragvorrichtung aufnehmen, und mit Mitteln (19a, 19b) zum Steuern der Räder der Tragvorrichtung, wobei sich die Steuermittel derart anordnen lassen, daß sie das Steuermoment der Tragvorrichtung mit der Steuerbewegung des Traktors synchronisieren, dadurch gekennzeichnet, daß die Mittel (17, 22, 26, 27) zum Befestigen der Tragvorrichtung am hinteren Teil des Traktors Montageteile (17, 22) umfassen, an welchen die Tragvorrichtung (10) zum Zwecke einer Schwenkbewegung um eine durch die feste Achse (12) hindurchlaufende Vertikalachse (18) gelagert ist, daß die Montageteile (17, 22) Mittel (26, 27) zum Befestigen am rückwärtigen Teil des Traktors aufweisen, um eine vertikale Bewegung der Montageteile (17, 22) relativ zum Traktor zu erlauben, aber eine Schwenkbewegung der Montageteile in Bezug auf den Traktor vermeiden.

2. Anbauteil nach Anspruch 1, dadurch gekennzeichnet, daß die Befestigungsmittel (26, 27) zwei Befestigungspunkte (26) aufweisen, die seitlich einen gegenseitigen Abstand einnehmen sowie einen dritten Befestigungspunkt (27), der zu den Befestigungspunkten (26) einen vertikalen Abstand einnimmt.

3. Anbauteil nach Anspruch 1 oder 2, dadurch gekennzeichnet, daß die Tragvorrichtung ein Zubehör in Gestalt eines Paares schwenkbar gelagerter Hubarme (43) aufweist, um beispielsweise einen Behälter, eine Schaufel, eine Gabel, einen Schneepflug oder landwirtschaftliches oder sonstiges Gerät, das sich zwischen den Hubarmen befindet, anzuheben.

4. Anbauteil nach Anspruch 3, dadurch gekennzeichnet, daß das Armpaar (43) von der Tragvorrichtung abnehmbar ist.

5. Anbauteil nach Anspruch 1 oder 2, dadurch gekennzeichnet, daß die Tragvorrichtung ein Zubehörteil in Gestalt eines Gabel-Hubmechanismus (50, 51) oder sonst einen vertikal ausfahrbaren Mechanismus trägt.

6. Anbauteil nach Anspruch 5, dadurch gekennzeichnet, daß der vertikal ausfahrbare Mechanismus von der Tragvorrichtung abnehmbar ist.

7. Anbauteil nach Anspruch 1 oder 2, dadurch gekennzeichnet, daß die Tragvorrichtung eine Zubehörteil in Gestalt einer Dreipunktverbindung (52, 53) trägt.

8. Anbauteil nach Anspruch 7, dadurch gekennzeichnet, daß die Dreipunktverbindung hydraulisch justierbar ist.

9. Anbauteil nach Anspruch 7 oder 8, dadurch gekennzeichnet, daß die Dreipunktverbindung von der Tragvorrichtung abnehmbar ist.

10. Anbauteil nach einem der vorausgegangenen Ansprüche, dadurch gekennzeichnet, daß die Steuermittel (19a, 19b) Mittel umfassen, die dann, wenn die Tragvorrichtung an einem mit steuerbaren Vorderrädern (29) ausgerüsteten Traktor befestigt ist und die Vorderräder des Traktors verdreht werden, die Räder (13) der Tragvorrichtung in Gegenrichtung zu jener Richtung verdrehen, in welcher die Vorderräder des Traktors verdreht werden.

11. Anbauteil nach Anspruch 10, dadurch gekennzeichnet, daß die Steuermittel (19a, 19b) eine Kontrolleinheit (30) aufweisen, die an die Räder der Tragvorrichtung angeschlossen und an die steuerbaren Vorderräder eines Traktors anschließbar sind, an welchem die Tragvorrichtung befestigt ist, und daß die Kontrolleinheit derart von dem Fahrer des Traktors betätigbar ist, daß sowohl die Räder des Traktors als auch die Räder der Trageinrichtung steuerbar sind.

12. Anbauteil nach Anspruch 10, dadurch gekennzeichnet, daß die Steuermittel (19a, 19b) eine Kontrolleinheit (38) umfassen, die zwischen den steuerbaren Rädern des Traktors und den steuerbaren Rädern der Trageinrichtung derart anschließbar ist, daß dann, wenn die Steuereinrichtung (41) des Traktors verdreht wird, die steuerbaren Räder des Traktors und die Räder der Trageinrichtung synchron arbeiten.

13. Traktor oder anderes Fahrzeug, das mit einem Anbauteil gemäß einem der vorausgegangenen Anspriche ausgerüstet ist.

**Revendications**

1. Equipement pour un tracteur, comprenant un dispositif (10) de support pour un accessoire et des moyens (17, 22, 26, 27) pour fixer le dispositif de support à l'arrière d'un tracteur (28), le dispositif de support ayant un axe fixe (12) portant des roues (13) disposées de façon à supporter au moins une partie de la charge du dispositif de support, et des moyens (19a, 19b) pour orienter les roues (13) précitées qui peuvent synchroniser les mouvements du dispositif de support et ceux du tracteur, et caractérisé en ce que les moyens (17, 22, 26, 27) pour fixer le dispositif de support à l'arrière du tracteur comprennent un montage (17, 22) par rapport auquel le dispositif de support (10) peut pivoter autour d'un axe vertical (18) qui traverse l'axe fixe (12), le montage (17, 22) possédant des organes (26, 27) de fixation à l'arrière du tracteur afin de permettre un déplacement vertical du montage (17, 22) par rapport au tracteur tout en empêchant un pivotement du montage par rapport au tracteur.

2. Equipement suivant la revendication 1, caractérisé en ce que les organes de fixation (26, 27) comprennent deux points de fixation (26) espacés latéralement et un troisième point de fixation (27) espacé verticalement des deux points (26).

3. Equipement suivant l'une des revendications 1 et 2, caractérisé en ce que le dispositif de support (10) porte un accessoire ayant la forme d'une paire de bras de levage (43) montés pivotants, par exemple pour soulever une benne, un godet, une fourche, un chasse-neige, ou des instruments agricoles ou autres placés entré ces bras.

4. Equipement suivant la revendication 3, caractérisé en ce que la paire de bras (43) peut être détachée du dispositif de support (10).

5. Equipement suivant l'une des revendications 1 et 2, caractérisé en ce que le dispositif de support (10) porte un accessoire ayant la forme d'un mécanisme de soulèvement par fourche (50, 51) ou d'un autre mécanisme s'étendant verticalement.

6. Equipement suivant la revendication 5, caractérisé en ce que le mécanisme s'étendant verticalement peut être détaché du dispositif de support (10).

7. Equipement suivant l'une des revendications 1 et 2, caractérisé en ce que le dispositif de support (10) porte un accessoire ayant la forme d'un attelage "trois points" (52, 53).

8. Equipement suivant la revendication 7, caractérisé en ce que l'attelage "trois points" peut être réglé hydrauliquement.

9. Equipement suivant l'une des revendications 7 et 8, caractérisé en ce que l'attelage "trois points" peut être détaché du dispositif de support (10).

10. Equipement suivant l'une des revendications 1 à 9, caractérisé en ce que les moyens (19a, 19b) pour orienter les roues (13) précitées comprennent des moyens qui, lorsque le dispositif de support (10) est fixé à un tracteur (28) ayant des roues ayant (29) dirigeables, et quand ces roues sont tournées, font tourner les roues (13) du dispositif de support dans la direction opposée à celle dans laquelle sont tournées les roues avant du tracteur.

11. Equipement suivant la revendication 10, caractérisé en ce que les moyens (19a, 19b) pour orienter les roues comprennent un ensemble de commande (30) qui est relié aux roues (13) du dispositif de support (10) et peut être relié aux roues avant orientables d'un tracteur (28) auquel est fixé le dispositif de support, cet ensemble de commande pouvant être actionné par le conducteur du tracteur afin de diriger à la fois les roues du tracteur et les roues du dispositif de support.

12. Equipement suivant la revendication 10, caractérisé en ce que les moyens (19a, 19b) pour orienter les roues comprennent un dispositif de commande (38) qui peut être relié entre les roues dirigeables (29) du tracteur (28) et les roues dirigeables du dispositif de support (10) de façon que quand le volant de direction (41) du tracteur est tourné, les roues dirigeables (29) du tracteur et les roues (13) du dispositif de support fonctionnent en synchronisme.

13. Tracteur ou autre véhicule, caractérisé en ce qu'il possède un équipement suivant l'une des revendications 1 à 12.

Fig.2.

Fig1.

Fig.3.

# Fig.4.

# Fig.6.

Fig.5.

Fig.7.

Fig.8.